# EUROPÄISCHE PATENTSCHRIFT

(11) **EP 4 133 343 B1**
(45) Veröffentlichungstag und Bekanntmachung des Hinweises auf die Patenterteilung: **13.03.2024**
(21) Anmeldenummer: 21731050.7
(22) Anmeldetag: 19.05.2021
(51) Int. Cl.: G05B 19/042

(54) **VERFAHREN ZUM BETREIBEN EINES REDUNDANTEN AUTOMATISIERUNGSSYSTEMS UND REDUNDANTES AUTOMATISIERUNGSSYSTEM**
REDUNDANT AUTOMATION SYSTEM AND METHOD FOR OPERATING A REDUNDANT AUTOMATION SYSTEM
PROCÉDÉ DE FONCTIONNEMENT D'UN SYSTÈME D'AUTOMATISATION REDONDANT ET SYSTÈME D'AUTOMATISATION REDONDANT

(30) Priorität: 09.07.2020 EP 20185017
(43) Veröffentlichungstag der Anmeldung: 15.02.2023
(73) Patentinhaber: Siemens Aktiengesellschaft, 80333 München (DE)
(72) Erfinder: GROSCH, Thomas, 90574 Roßtal (DE); LAFORSCH, Jürgen, 77815 Bühl (DE); RENSCHLER, Albert, 76275 Ettlingen (DE)
(74) Vertreter: Siemens Patent Attorneys
(86) Internationale Anmeldenummer: PCT/EP2021/063289
(87) Internationale Veröffentlichungsnummer: WO 2022/008128

(56) Entgegenhaltungen:
- EP-B1- 2 657 797
- EP-B1- 2 667 269
- US-A1- 2009 076 628

## Beschreibung

Die Erfindung betrifft ein Verfahren zum Betreiben eines redundanten Automatisierungssystems zur Steuerung eines technischen Prozesses, wobei ein erstes Teilsystem, ein zweites Teilsystem, ein drittes Teilsystem und Ausgabemittel für den Prozess in einem Kommunikations-Netzwerk derart betrieben werden, dass Kommunikations-Pfade zwischen ihnen zum Austausch von Daten genutzt werden, wobei das erste Teilsystem mit einem ersten Steuerprogramm mit einem ersten Programmzyklus zyklusorientiert erste Ausgangsdaten über ein PeripherieProtokoll an die Ausgabemittel weiterleitet, wobei dafür eine aktive erste Applikationsbeziehung zwischen dem ersten Teilsystem und den Ausgabemitteln eingerichtet wird, wobei parallel zum ersten Teilsystem das zweite Teilsystem mit einem Steuerprogramm mit einem zweiten Programmzyklus zweite Ausgangsdaten bzw. das dritte Teilsystem mit einem dritten Steuerprogramm mit einem dritten Programmzyklus dritte Ausgangsdaten in Bereitschaft zur Übernahme der Steuerung des technischen Prozesses berechnet, wobei weiterhin zwischen dem zweiten Teilsystem und den Ausgabemitteln eine passive zweite Applikationsbeziehung und zwischen dem dritten Teilsystem und den Ausgabemitteln eine passive dritte Applikationsbeziehung eingerichtet wird, wobei die drei Teilsysteme derart betrieben werden, dass sie einander Kenntnis über ihre berechneten Ausgangsdaten haben.

In der Automatisierungstechnik werden verstärkt, hochverfügbare Lösungen (H-Systeme) gefordert, welche geeignet sind, eventuell auftretende Stillstandszeiten der Anlage oder des Prozesses auf ein Minimum zu reduzieren. Eine Entwicklung derartiger hochverfügbarer Lösungen ist sehr kostenintensiv, wobei ein im Automatisierungsumfeld gewöhnlich eingesetztes H-System sich dadurch auszeichnet, dass zwei oder mehrere Teilsysteme in Form von Automatisierungsgeräten oder Rechnersystemen über eine Synchronisationsverbindung miteinander gekoppelt sind. Auf die an dieses H-System angeschlossenen Peripherieeinheiten können prinzipiell beide Teilsysteme lesend und/schreibend zugreifen. Eines der beiden Teilsysteme ist bezüglich der an das System angeschlossenen Peripherie führend. Dies bedeutet, dass Ausgaben zu Peripherieeinheiten bzw. Ausgangsinformationen oder Ausgabedaten für diese Peripherieeinheiten nur von einem der beiden Teilsysteme durchgeführt werden, welches auch als Master arbeitet bzw. eine Masterfunktion übernommen hat. Damit beide Teilsysteme synchron ablaufen können, werden diese in der Regel über Synchronisationsverbindungen in regelmäßigen Abständen synchronisiert. Bezüglich einer Häufigkeit der Synchronisation und deren Umfang können verschiedene Ausprägungen unterschieden werden, z.B. ein Warm-Standby, oder ein Hot-Standby.

Von einem H-System in der Automatisierungstechnik wird ein stoßfreies "Failover" gefordert, falls eines der Teilsysteme ausfällt und ein anderes Teilsystem übernehmen muss. Dies bedeutet, dass in einem Störfall, trotz dieser Umschaltung diese Übernahme von einem Teilsystem auf das andere Teilsystem, sich nicht störend auf den zu steuernden technischen Prozess bzw. auf die Prozesssteuerung auswirkt. Ein Sprung (Stoß) der Ausgangswerte an den Ausgängen des Prozesses aufgrund einer Umschaltung ist nicht erwünscht und sollte vermieden werden. Unter stoßfrei ist daher auch die Stetigkeit eines Kurvenverlaufs der Prozessausgangswerte zu verstehen.

Um dies zu erreichen, müssen die beiden Teilsysteme zum Zeitpunkt des Ausfalls den gleichen Systemzustand aufweisen. Dies wird durch ein geeignetes Synchronisationsverfahren sichergestellt.

In der EP 2 667 269 B1 wird ein Verfahren zum Betreiben eines mindestens zwei Teilsysteme aufweisenden Automatisierungssystem vorgestellt. Die Automatisierungssysteme sind jeweils mit einem Steuerungsprogramm versehen. Die Teilsysteme arbeiten mit einer "ereignissynchronen Verarbeitung", welches bedeutet, dass sowohl der Master als auch der Slave aufgrund eines Ereignisses gleiche Programmpfade des jeweiligen Steuerprogramms durchlaufen, wobei die Durchläufe zeitlich asynchron erfolgen.

Auch die EP 2 657 797 B1 offenbart ein ähnliches Verfahren, wobei nach Auftreten eines Ereignisses an einen bestimmten Zeitpunkt Unterbrechungsstellen an den Slave übermittelt werden.

Aus der US 2009/0076628 A1 ist es bekannt, bei einem redundanten Automatisierungssystem mit drei Teilsystemen die Versionen der Ausgangsdaten zu vergleichen.

Mit den genannten europäischen veröffentlichten Patentschriften ist nun bekannt, dass in der Automatisierungstechnik zur Steigerung der Verfügbarkeit sogenannte "1 von 2 Systeme" eingesetzt werden, hierbei werden in der Regel zwei meist identische Teilsysteme eine Steuerungsaufgabe übernehmen und entsprechend synchronisiert, redundant arbeiten. Beim Ausfall eines der beiden Teilsysteme kann das jeweils andere Teilsystem die Steuerungsaufgabe weiterhin bearbeiten, ohne einen Produktionsprozess zu unterbrechen. Entscheidend für die mit einem "1 von 2 System" erreichbare Verfügbarkeit ist auch ein sogenannter Diagnosedeckungsgrad (Diagnostic coverage DC). Um einen hohen DC-Wert zu erhalten, muss eine entsprechend aufwändige Selbstdiagnose-Funktionalität in den beiden Teilsystemen eines "1 von 2 Systems" implementiert werden. Diese zusätzliche Selbstdiagnose-Funktionalität kann umgangen werden, wenn man ein sogenanntes "2 von 3 System" einsetzt.

Ausgehend von dem bekannten Stand der Technik ist es eine Aufgabe der vorliegenden Erfindung, ein alternatives redundantes Automatisierungssystem bzw. Verfahren zum Betrieb eines Automatisierungssystems zu schaffen.

Die Aufgabe wird dadurch gelöst, dass das zweite Teilsystem eine zweite Ausgabequittung und das dritte Teilsystem eine dritte Ausgabequittung an das erste Teilsystem sendet, und das erste Teilsystem die ersten Ausgangsdaten erst an die Ausgabemittel weitergibt, wenn die zweite Ausgabequittung und die dritte Ausgabequittung im ersten Teilsystem eingetroffen sind, wobei weiterhin in jedem Teilsystem ein Vergleichsmittel zyklisch betrieben wird, welches die ersten, zweiten und dritten Ausgangsdaten miteinander vergleicht und die jeweiligen Vergleichsmittel derart betrieben werden, dass bei jedem Vergleich, bei dem als Ergebnis alle Ausgangsdaten gleich sind, keine weitere Aktion durchgeführt wird, und bei einem Vergleich, bei dem Abweichungen zwischen den Ausgangsdaten festgestellt werden, dasjenige Teilsystem mittels einer Mehrheitsentscheidung als gestört erkannt wird, bei dem die Abweichung der eigenen Ausgangsdaten zu den anderen Ausgangsdaten am größten ist, und aufgrund dieses Ergebnisses wird, für den Fall, dass das erste Teilsystem als gestört erkannt wurde, die zweite Applikationsbeziehung von dem passiven Zustand in einen aktiven Zustand überführt und entsprechend die erste Applikationsbeziehung von dem aktiven Zustand in einen passiven Zustand überführt und von nun an, werden die zweiten Ausgangsdaten über die Ausgabemittel für den Prozess bereitgestellt. Dazu wird das redundante Automatisierungssystem derart betrieben, dass das zweite und das dritte Teilsystem dem ersten Teilsystem zeitlich nachlaufen und das erste Teilsystem über die Kommunikationspfade zeitlich asynchron den Austausch der Daten zu den anderen Teilsystemen durchführt, wobei aus dem ersten Teilsystem und dem zweiten Teilsystem ein erstes Nachlaufsystem und aus dem ersten Teilsystem und dem dritten Teilsystem ein zweites Nachlaufsystem gebildet wird, wobei Synchronisationsdaten für das erste Nachlaufsystem und das zweite Nachlaufsystem identisch sind und über eine Multicast-basierte Kommunikation von dem ersten Teilsystem ausgesendet werden.

Mit dieser Vorgehensweise wird eine stoßfreie Umschaltung von den ersten Ausgangsdaten zu den zweiten Ausgangsdaten erreicht. Dadurch ist sichergestellt, dass im Umschaltfall, die zuletzt gültigen oder neueren Ausgangsdaten geschrieben werden. Die Ausgabequittungen für das Bereitstellen von Ausgangsdaten werden demnach sowohl von dem zweiten Teilsystem als auch von dem dritten Teilsystem zum ersten Teilsystem gesendet. Das erste Teilsystem führt eine tatsächliche Ausgabe von ersten Ausgangsdaten an den Prozess erst aus, wenn die Quittungen von beiden anderen Teilsystemen eingetroffen sind.

Demnach synchronisieren sich die beiden nachlaufenden Teilsysteme asynchron, wobei das erste Teilsystem die Synchronisationsdaten an das zweite Teilsystem und das dritte Teilsystem schickt. Das hat den Vorteil, dass die Synchronisationsdaten für das erste Nachlaufsystem sowie die für das zweite Nachlaufsystem identisch sind und die Synchronisationsdaten können damit effizient über eine Multicast-basierte Kommunikation von dem ersten Teilsystem übertragen werden, welches wiederum die Bandbreite in den Kommunikationskanälen spart.

In einer weiter optimierten Ausgestaltung des Verfahrens sendet das zweite Teilsystem eine zweite Zyklus-Quittung und das dritte Teilsystem eine dritte Zyklus-Quittung an das erste Teilsystem, und im ersten Teilsystem wird ein nächster erneuter erster Programmzyklus erst gestartet, wenn alle Quittungen eingetroffen sind.

Eine Übertragung aller relevanten Informationen insbesondere der in Bezug auf die Kenntnis der Teilsysteme, dass sie einander über ihre berechneten Ausgangsdaten bescheid wissen, erfolgt zeitlich asynchron. Dadurch wird eine Verarbeitungsleistung des ersten Teilsystems von einer für eine Ereignissynchronisation zur Verfügung stehenden Kommunikationsbandbreite entkoppelt, was insbesondere im Hinblick auf ein zunehmendes Ungleichgewicht zwischen einer Steigerung einer Verarbeitungsleistung des Prozesses einerseits und einer Steigerung einer Kommunikationsleistung von Kommunikationsprozessen von Vorteil ist.

Als ein wesentlicher Vorteil bei der asynchronen Kommunikation zwischen dem ersten Teilsystem und dem zweiten und dritten Teilsystem wird angesehen, dass auch langsame Kommunikationsverbindungen für den Aufbau eines hochverfügbaren bzw. redundanten Automatisierungssystem genutzt werden können. Dies bedeutet, dass auch eine an sich im Hinblick auf eine Übertragungsbandbreite oder auf eine Antwortzeit (Latenz) schlechtere Kommunikationsverbindung auch als eine Kommunikationsverbindung vorgesehen werden kann, die auch von anderen Kommunikationsteilnehmern genutzt wird und damit den beiden Teilnehmern nicht exklusiv für Synchronisationszwecke zur Verfügung steht.

Weiterhin von Vorteil ist, wenn die Kommunikation der Teilsysteme über das Kommunikations-Netzwerk mittels OPC UA oder OPC UA TSN erfolgt.

Eine Kommunikation der Teilsysteme zu den Ausgabemitteln wird vorteilhafter Weise für ein Profinet-Netzwerk mit einem entsprechenden Peripherieprotokoll (Profinet Systemredundanz) konfiguriert.

Weiterhin ist ein herausragender Vorteil des Verfahrens, dass zumindest ein Teilsystem in einer IT-Infrastruktur als virtuelles Teilsystem in Form einer Dienstleistung bereitgestellt wird.

Noch vorteilhafter ist es, wenn alle drei Teilsysteme als virtuelle Teilsysteme ausgestaltet sind.

Das Bereitstellen einer Dienstleistung in einer IT-Infrastruktur wird als sogenanntes Cloud Computing bezeichnet, dieses beinhaltet in der Regel das Bereitstellen von Speicherplatz, Rechnerleistung und/oder Anwendungssoftware als Dienstleistung. Technischer formuliert umschreibt Cloud-Computing den Ansatz, IT-Infrastruktur über ein Rechnernetzwerk zur Verfügung zu stellen, ohne dass diese Infrastruktur bzw. die Hardware lokal vor Ort installiert sein muss.

Diese vorgeschlagene Kombination einer asynchronen Synchronisation und einer Architektur eines "2 von 3 Systems", bietet den Vorteil, dass auch über Netzwerke mit einer schlechten Latenz eine gute Systemperformance erreicht werden kann.

Als Vorteil wird angesehen, dass beispielsweise ein drittes Teilsystem oder eine dritte PLC/SPS kostengünstig in einer Cloud-Umgebung instanziiert werden kann. Dadurch ist die Realisierung von performanten, Cloud-basierten Automatisierungslösungen möglich, welche eine dem Automatisierungsumfeld angemessene Verfügbarkeit bieten.

Ein weiterer Vorteil der hier beschriebenen Lösung besteht darin, dass im laufenden Betrieb von einer "1 von 2" zu einer "2 von 3" Lösung gewechselt werden kann, um die Zuverlässigkeit für kritische Prozess-Schritte zu erhöhen.

Ein weiterer Verfahrensschritt sieht vor, dass für den Fall, dass von nun an das zweite Teilsystem die Ausgangsdaten über die aktive zweite Applikationsbeziehung an die Ausgabemittel weiterleitet nun das dritte Teilsystem die dritte Ausgabequittung und die dritte Zyklusquittung an das zweite Teilsystem sendet und das zweite Teilsystem die zweiten Ausgangsdaten erst an die Ausgabemittel weitergibt, wenn die dritte Ausgabequittung und die dritte Zyklusquittung beim zweiten Teilsystem eingetroffen sind.

Auch betrifft die Erfindung ein redundantes Automatisierungssystem zur Steuerung eines technischen Prozesses, umfassend ein erstes Teilsystem, ein zweites Teilsystem, ein drittes Teilsystem und Ausgabemittel, welche über ein Kommunikations-Netzwerk verbunden sind, wobei das erste Teilsystem ausgebildet ist, mit einem ersten Steuerprogramm mit einem ersten Programmzyklus zyklusorientiert erste Ausgangsdaten über eine aktive erste Applikationsbeziehung an die Ausgabemittel auszugeben, das zweite Teilsystem mit einem zweiten Steuerprogramm mit einem zweiten Programmzyklus ausgebildet ist, in Bereitschaft über eine zweite Applikationsbeziehung zweite Ausgangsdaten für die Ausgabemittel bereitzustellen, das dritte Teilsystem mit einem dritten Steuerprogramm mit einem dritten Programmzyklus ausgebildet ist, in Bereitschaft über eine dritte Applikationsbeziehung dritte Ausgangsdaten für die Ausgabemittel bereitzustellen, wobei weiterhin die drei Teilsysteme ausgestaltet sind, sich gegenseitig ihre berechneten Ausgangsdaten bereitzustellen.

Die eingangs genannte Aufgabe, ein verbessertes Automatisierungssystem zu den bisher bereits bekannten bereitzustellen, wird dadurch gelöst, dass das zweite Teilsystem ein zweites Quittungsausgabemittel aufweist, welches ausgestaltet ist, eine zweite Ausgabequittung zu senden und das dritte Teilsystem ein drittes Quittungsausgabemittel aufweist, welches ausgestaltet ist, eine dritte Ausgabequittung zu senden und das erste Teilsystem ein Freischaltmittel aufweist, welches ausgestaltet ist, die ersten Ausgangsdaten erst an die Ausgabemittel weiterzugeben, wenn die zweite Ausgabequittung und die dritte Ausgabequittung im ersten Teilsystem eingetroffen sind, und weiterhin weist jedes Teilsystem ein Vergleichsmittel auf, welches ausgestaltet ist, zyklisch die ersten, zweiten und dritten Ausgangsdaten miteinander zu vergleichen und für den Fall, dass bei einem Vergleich, bei dem als Ergebnis alle Ausgangsdaten gleich sind, keine weitere Aktion durchgeführt wird, und für den Fall, dass bei einem Vergleich, bei dem Abweichungen zwischen den Ausgangsdaten festgestellt werden, dasjenige Teilsystem mittels einer Mehrheitsentscheidung als gestört erkannt wird, bei dem die Abweichung der eigenen Ausgangsdaten zu den anderen Ausgangsdaten am größten ist, wobei dazu ein Abweichungserfassungsmittel vorhanden ist, wobei das erste Teilsystem weiterhin ausgestaltet ist, für den Fall, dass das erste Teilsystem als gestört erkannt wurde, die erste Applikationsbeziehung von dem aktiven Zustand in einen passiven Zustand zu überführen und das zweite Teilsystem ausgestaltet ist, die zweite Applikationsbeziehung von dem passiven Zustand in einen aktiven Zustand zu überführen, wodurch von nun an, die zweiten Ausgangsdaten über die Ausgabemittel für den Prozess bereitgestellt werden.

Eine weitere vorteilhafte Ausgestaltung des redundanten Automatisierungssystems sieht vor, dass aus dem ersten Teilsystem und dem zweiten Teilsystem ein erstes Nachlaufsystem gebildet ist, und dass aus dem ersten Teilsystem und dem dritten Teilsystem ein zweites Nachlaufsystem gebildet ist, wobei das erste Teilsystem derart ausgestaltet ist, dass es über eine Multicast-basierte Kommunikation Synchronisationsdaten für das erste Nachlaufsystem und das zweite Nachlaufsystem bereitstellt.

Eine Weiterbildung des Automatisierungssystems sieht vor, dass das zweite Quittungsausgabemittel zusätzlich ausgestaltet ist, eine zweite Zyklusquittung an das erste Teilsystem zu senden und das dritte Quittungsausgabemittel ausgestaltet ist, eine dritte Zyklusquittung an das erste Teilsystem zu senden und das erste Teilsystem ausgestaltet ist, einen erneuten ersten Programmzyklus erst zu starten, wenn alle Quittungen eingetroffen sind.

Mit besonderem Vorteil wird zumindest ein Teilsystem in einer IT-Infrastruktur als virtuelles Teilsystem in Form einer Dienstleistung angeordnet sein. Da in jüngster Vergangenheit zunehmend die Möglichkeit diskutiert wird, Steuerungsapplikationen in eine Cloud zu verlegen, wird hier auch für ein redundantes Automatisierungssystem eine Lösung präsentiert. Bei einer Cloud handelt es sich insbesondere um eine Infrastruktur, welche beispielsweise über das Internet verfügbar gemacht wird und welche in der Regel Speicherplatz, Rechenleistung und/oder Anwendungssoftware bereitstellt, ohne dass eine entsprechende Infrastruktur auf einen lokalen Rechner installiert und gespeichert sein muss. Bei einer Cloud wird die Hardware in der Regel nicht von dem Nutzer einer Anwendung bzw. Applikation selbst betrieben oder bereitgestellt.

Unter einer Cloud bzw. Cloud-Computing kann insbesondere die Bereitstellung von IT-Infrastruktur als Dienstleistung ggf. von einem entfernten Standort aus, zu verstehen sein. Eine Cloud kann über das Internet erreichbar sein, oder auch von einem Unternehmen als sogenannte private Cloud betrieben werden, bei welcher die IT-Infrastruktur über ein Netzwerk, z.B. ein Intranet des Unternehmens, erreichbar ist.

Mit der Erfindung ist es demnach möglich, zumindest ein Teilsystem in eine Cloud zu verlegen.

Die Zeichnung zeigt ein Ausführungsbeispiel der Erfindung, dabei zeigt die
- FIG 1: ein redundantes Automatisierungssystem, ausgestaltet in einer 2 von 3 Konfiguration,
- FIG 2: das aus FIG 1 bekannte Automatisierungssystem in einer detaillierten Darstellung bezogen auf die Teilsysteme,
- FIG 3: das Prinzip eines Vergleichsmittels,
- FIG 4: eine Tabelle zur Veranschaulichung der Ermittlung einer Abweichungshäufigkeit für ein bestimmtes Teilsystem,
- FIG 5: ein Blockschaltbild, wobei ein Teilsystem in einer Cloud angeordnet ist, und
- FIG 6: eine detailliertere Darstellung eines Teilsystems zur Erklärung des Freischaltemittels.

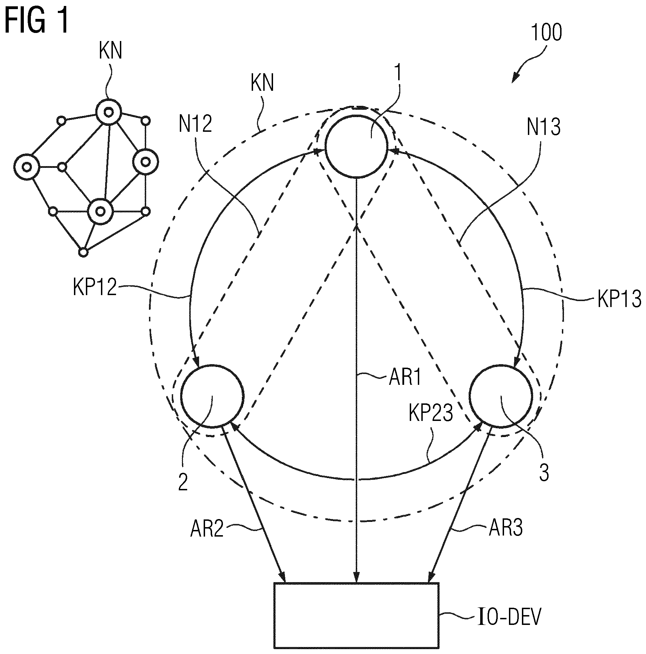

Gemäß FIG 1 ist ein redundantes Automatisierungssystem 100 zur Steuerung eines technischen Prozesses dargestellt. Das redundante Automatisierungssystem 100 umfasst ein erstes Teilsystem 1, ein zweites Teilsystem 2, ein drittes Teilsystem 3 und Ausgabemittel IO-Dev. Die genannten Teilsysteme 1,2,3 und das Ausgabemittel IO-Dev sind über ein Kommunikationsnetzwerk KN verbunden, seitlich dargestellt ist nochmal ein symbolisiertes Kommunikationsnetzwerk in einer Struktur, wie sie heute üblich ist, wie z.B. für das Internet. Mit Hilfe dieses Kommunikationsnetzwerkes KN können zwischen den Teilsystemen 1,2,3 Kommunikations-Pfade KP12, KP13, KP23 aufgespannt werden. Demnach existiert zwischen dem ersten Teilsystem 1 und dem zweiten Teilsystem 2 ein erster Kommunikations-Pfad KP12, zwischen dem ersten Teilsystem 2 und dem dritten Teilsystem 3 existiert ein zweiter Kommunikations-Pfad KP13 und zwischen dem zweiten Teilsystem 2 und dem dritten Teilsystem 3 existiert ein dritter Kommunikations-Pfad KP23.

Das erste Teilsystem 1 ist als ein Master ausgebildet und dementsprechend kann das erste Teilsystem 1 mit einem ersten Steuerprogramm P1 mit einem ersten Programmzyklus Z1 zyklusorientiert erste Ausgangsdaten A1 über eine aktive erste Applikationsbeziehung AR1 an die Ausgabemittel IO-Dev ausgeben.

Das zweite Teilsystem 2 ist mit einem zweiten Steuerprogramm P2 mit einem zweiten Programmzyklus Z2 ausgebildet und ist in Bereitschaft, nämlich in einer Slave-Funktion, über eine zweite Applikationsbeziehung AR2, zweite Ausgangsdaten A2 für die Ausgabemittel IO-Dev bereitzustellen.

Das dritte Teilsystem 3 ist mit einem dritten Steuerprogramm P3 mit einem dritten Programmzyklus Z3 ausgebildet und ebenfalls in Bereitschaft über eine dritte Applikationsbeziehung AR3, dritte Ausgangsdaten A3 für die Ausgabemittel IO-Dev bereitzustellen, wobei weiterhin die drei Teilsysteme 1,2,3 ausgestaltet sind, sich gegenseitig ihre berechneten Ausgangsdaten A1,A2,A3 über die Kommunikationspfade KP12, KP13, KP23 bereitzustellen.

Das zweite und das dritte Teilsystem 2,3 laufen dem ersten Teilsystem 1 zeitlich nach und das erste Teilsystem 1 tauscht über die Kommunikationspfade KP12, KP13 zeitlich asynchron die benötigten Daten mit, wobei aus dem ersten Teilsystem 1 und dem zweiten Teilsystem 2 ein erstes Nachlaufsystem N12 und aus dem ersten Teilsystem 1 und dem dritten Teilsystem 3 ein zweites Nachlaufsystem N13 gebildet wird, wobei die notwendigen Synchronisationsdaten für das erste Nachlaufsystem N12 und das zweite Nachlaufsystem N13 identisch sind und daher mit Vorteil über eine Multicastbasierte Kommunikation von dem ersten Teilsystem 1 zu den anderen Teilsystemen 2,3 nur einmal ausgesendet werden muss.

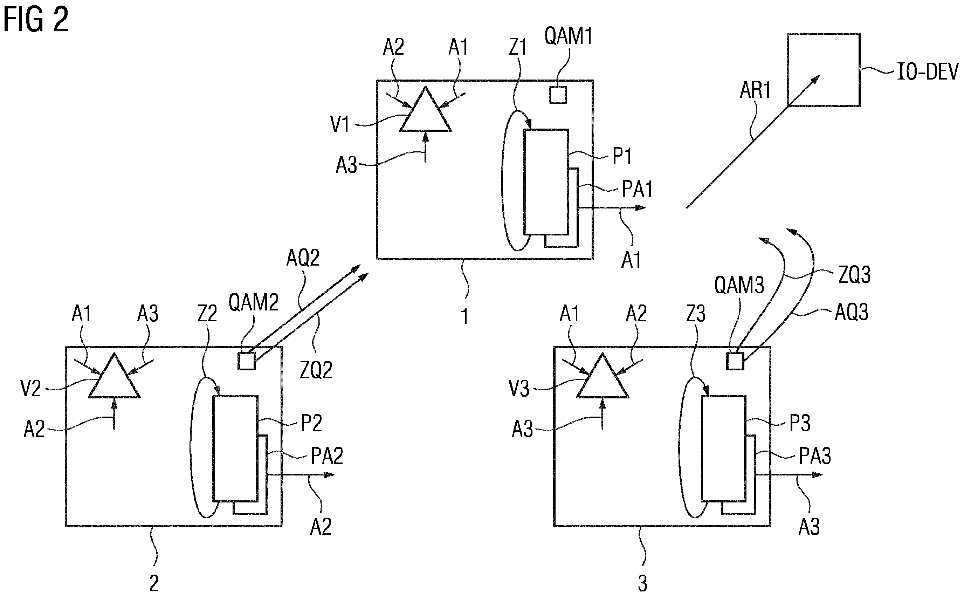

Mit der FIG 2 wird detaillierter auf die Ausgestaltung der Teilsysteme 1,2,3 eingegangen. Das erste Teilsystem 1 weist ein erstes Quittungsausgabemittel QAM1 auf, über dieses Quittungsausgabemittel QAM1 kann das erste Steuerprogramm P1 mit seinem ersten Programmzyklus Z1 Quittungen für andere Teilsysteme 2,3 bereitstellen, wenn z.B. der erste Programmzyklus Z1 vollständig durchlaufen ist oder die ersten Ausgangsdaten A1 vollständig bereitstehen. Das erste Steuerprogramm P1 schreibt in ein erstes Prozessabbild PA1 die ersten Ausgangsdaten A1 rein, wovon sie aus dem ersten Prozessabbild PA1 über eine erste Applikationsbeziehung AR1 zu einem Ausgabemittel IO-Dev gesendet werden können.

Da aber in der nun vorherrschenden Konfiguration des redundanten Automatisierungssystems 100 das erste Teilsystem 1 die führende Steuerungsrolle für den technischen Prozess hat, senden das zweite Teilsystem 2 und das dritte Teilsystem 3 jeweils ihre zweite Ausgabequittung AQ2 bzw. ihre dritte Ausgabequittung AQ3 über das zweite Quittungsausgabemittel QAM2 bzw. das dritte Quittungsausgabemittel QAM3 zum ersten Teilsystem 1.

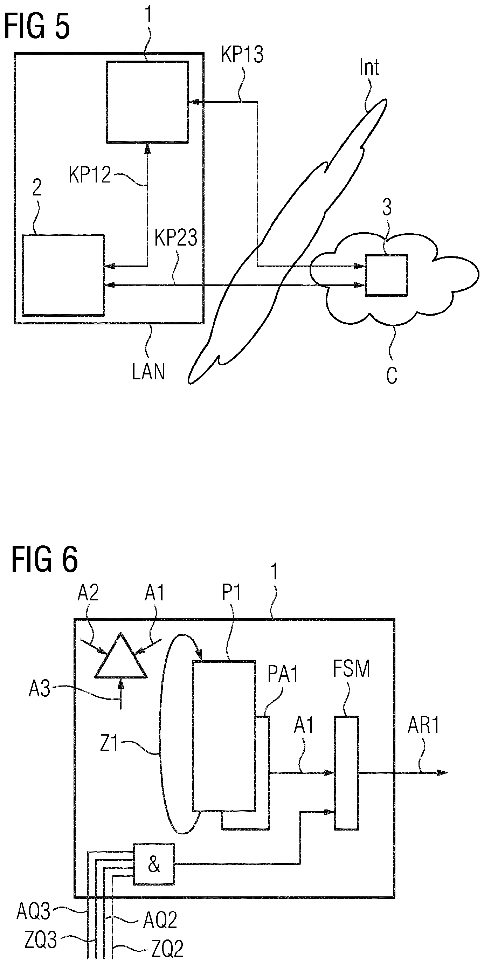

Mit FIG 6 gezeigt, verfügt das erste Teilsystem 1 über ein Freischaltmittel FSM, welches ausgestaltet ist, die ersten Ausgangsdaten A1 erst dann die Ausgabemittel IO-Dev weiterzugeben, wenn die zweite Ausgabequittung AQ2 und die dritte Ausgabequittung AQ3 im ersten Teilsystem 1 eingetroffen sind.

Um einen möglichen Störfall aufzudecken, weist jedes Teilsystem 1,2,3 gemäß FIG 2 ein Vergleichsmittel V1,V2,V3 auf, welches ausgestaltet ist, zyklisch die ersten, zweiten und dritten Ausgangsdaten A1,A2,A3 miteinander zu vergleichen und für den Fall, dass bei einem Vergleich, bei dem als Ergebnis alle Ausgangsdaten A1,A2,A3 gleich sind, keine weitere Aktion durchgeführt wird.

Aber für den Fall, dass bei einem Vergleich, bei dem Abweichungen zwischen den Ausgangsdaten A1,A2,A3 festgestellt werden, dasjenige Teilsystem 1,2,3 mittels einer Mehrheitsentscheidung ME als gestört erkannt wird, bei dem die Abweichung der eigenen Ausgangsdaten A1,A2,A3 zu den anderen Ausgangsdaten A1,A2,A3 am größten ist.

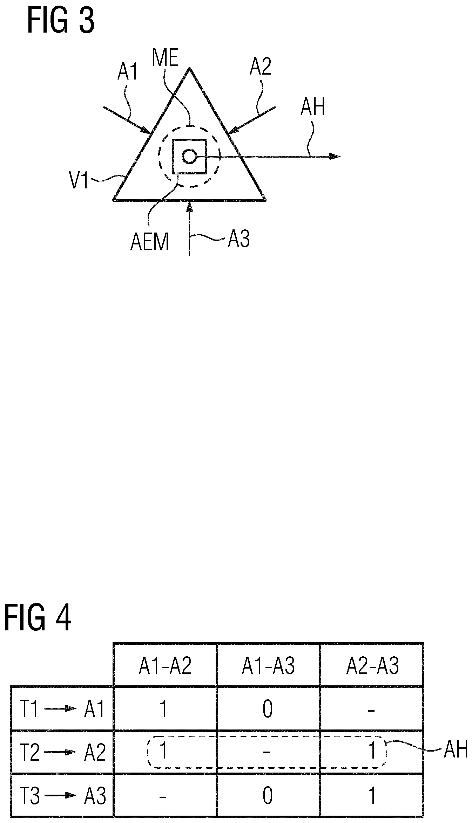

Dazu ist ein Abweichungserfassungsmittel AEM vorhanden, wie es in FIG 3 abgebildet ist. In dem ersten Vergleichsmittel V1 ist das Abweichungserfassungsmittel AEM angeordnet, welches mittels einer Mehrheitsentscheidung ME eine Abweichungshäufigkeit AH, bezogen auf ein Teilsystem 1,2,3, bereitstellt.

Mit der FIG 4 soll in einer Tabelle veranschaulicht werden, wie man die Mehrheitsentscheidung ME mittels einer Abweichungshäufigkeit AH ermittelt. In der ersten Spalte sind die Teilsysteme 1,2,3, wie sie ihre Ausgangsdaten A1,A2,A3 hervorrufen, dargestellt. Die zweite Spalte soll der Einfachheit halber normierte Ausgangsdaten A1,A2,A3 in ihrer Wertigkeit darstellen. Ab der dritten Spalte wird nun die Differenz zwischen den Ausgangsdaten A1,A2,A3 betragsmäßig dargestellt. Es werden demnach die Differenz zwischen den ersten Ausgangsdaten A1 und A2, die Differenz zwischen den ersten Ausgangsdaten A1 und den dritten Ausgangsdaten A3 und die Differenz zwischen den zweiten Ausgangsdaten A2 und den dritten Ausgangsdaten A3 betragsmäßig dargestellt. In der ersten Zeile T1 wird die Abweichung 1,0,- weil es für eine Abweichung zwischen den zweiten Ausgangsdaten A2 und den dritten Ausgangsdaten A3, bezogen auf die ersten Ausgangsdaten A1, keine gibt.

Die zweite Zeile T2 zeigt die Abweichung 1,-,1 an. Die dritte Zeile zeigt die Abweichung -,0,1 an. Damit ergibt sich in der zweiten Zeile für das zweite Teilsystem 2 eine Abweichungshäufigkeit AH, denn zweimal existiert eine Abweichung von 1, welches in Summe die Wertigkeit 2 ergibt. Damit wird aufgrund der Mehrheitsentscheidung ME festgestellt, dass das zweite Teilsystem 2 als gestört gelten muss. Jetzt würden Programmszenarien eintreten um das gestörte Teilsystem abzuschalten, zwar hat weiterhin das erste Teilsystem 1 die Masterfunktionalität, aber das zweite Teilsystem 2 wird derart weggeschaltet, dass es bei Ausfall des ersten Teilsystems 1 nicht als redundantes Teilsystem fungieren kann, jetzt könnte nur das dritte Teilsystem 3 als redundantes Teilsystem zum ausgefallenen ersten Teilsystem 1 fungieren.

Für den Fall, dass das erste Teilsystem 1 als gestört gilt, wäre die Abweichungshäufigkeit AH in der ersten Zeile T1 vom ersten Teilsystem 1 zu finden.

Mit der FIG 5 ist die Möglichkeit dargestellt, zumindest ein Teilsystem 1,2,3, nämlich das dritte Teilsystem 3, in einer IT-Infrastruktur als virtuelles Teilsystem in Form einer Dienstleistung anzuordnen. Die IT-Infrastruktur entspricht demnach einer Cloud C. Über ein Internet Int können die Kommunikationspfade KP13 bzw. KP23 nach wie vor zu den anderen Teilsystemen 1,2 aufgebaut werden. Das erste Teilsystem 1 und das zweite Teilsystem 2, befinden sich allerdings in einem Local Area Network Lan, wie es z.B. auf einem Fertigungsgelände einer industriellen Automatisierungsanlage existiert, der Vorteil ist, dass hier ein redundantes Automatisierungssystem 100 aufgebaut ist, bei welchem nicht zwangsläufig ein drittes physikalisches Teilsystem 3 auf dem Fertigungsgelände platziert sein muss, sondern als eine Backup-Lösung in einer Cloud C realisiert ist, welches ein Kostenvorteil bietet und demnach würde sich das dritte Teilsystem 3 nicht von dem zweiten Teilsystem 2 unterscheiden.

Gemäß FIG 6 wird noch einmal das Freischaltmittel FSM in Bezug auf die Quittungen dargestellt. Beispielsweise werden in dem ersten Teilsystem 1 die zweite Ausgabequittung AQ2, die dritte Ausgabequittung AQ3, die zweite Zyklusquittung ZQ2 und die dritte Zyklusquittung ZQ3 über eine Und-Verknüpfung zusammengeschaltet und an das Freischaltmittel FSM als ein Gültigkeitssignal weitergeleitet, die von dem ersten Prozessabbild PA1 des ersten Teilsystems 1 bereitgestellten ersten Ausgangsdaten A1 können damit über die erste Applikationsbeziehung AR1, beispielsweise über ein Profinet, zu den Ausgabemittel IO-Dev gesendet werden.

## Patentansprüche

1. Verfahren zum Betreiben eines redundanten Automatisierungssystems (100) zur Steuerung eines technischen Prozesses, wobei ein erstes Teilsystem (1), ein zweites Teilsystem (2), ein drittes Teilsystem (3) und Ausgabemittel (IO-Dev) für den Prozess in einem Kommunikations-Netzwerk (KN) derart betrieben werden, dass Kommunikations-Pfade (KP12,KP13,KP23) zwischen ihnen zum Austausch von Daten genutzt werden, wobei
- das erste Teilsystem (1) mit einem ersten Steuerprogramm (P1) mit einem ersten Programmzyklus (Z1) zyklusorientiert erste Ausgangsdaten (A1) über ein Peripherieprotokoll (PN) an die Ausgabemittel (IO-Dev) weiterleitet, wobei dafür eine aktive erste Applikationsbeziehung (AR1) zwischen dem ersten Teilsystem (1) und den Ausgabemitteln (IO-Dev) eingerichtet wird, wobei parallel zum ersten Teilsystem (1)
- das zweite Teilsystem (2) mit einem zweiten Steuerprogramm (P2) mit einem zweiten Programmzyklus (Z2) zweite Ausgangsdaten (A2) bzw. das dritte Teilsystem (3) mit einem dritten Steuerprogramm (P3) mit einem dritten Programmzyklus (Z3) dritte Ausgangsdaten (A3) in Bereitschaft zur Übernahme der Steuerung des technischen Prozesses berechnet, wobei weiterhin
- zwischen dem zweiten Teilsystem (2) und den Ausgabemitteln (IO-Dev) eine passive zweite Applikationsbeziehung (AR2) und zwischen dem dritten Teilsystem (3) und den Ausgabemitteln (IO-Dev) eine passive dritte Applikationsbeziehung (AR3) eingerichtet wird,
- wobei die drei Teilsysteme (1,2,3) derart betrieben werden, dass sie einander Kenntnis über ihre berechneten Ausgangsdaten (A1, A2, A3) haben,
**dadurch gekennzeichnet, dass**
- das zweite Teilsystem (2) eine zweite Ausgabequittung (AQ2) und das dritte Teilsystem (3) eine dritte Ausgabequittung (AQ3) an das erste Teilsystem (1) sendet,
- das erste Teilsystem (1) die ersten Ausgangsdaten (A1) erst an die Ausgabemitteln (IO-Dev) weitergibt, wenn die
- zweite Ausgabequittung (AQ2) und dritte Ausgabequittung (AQ3) im ersten Teilsystem (1) eingetroffen sind, und weiterhin wird,
- in jedem Teilsystem (1,2,3) ein Vergleichsmittel (V1,V2,V3) zyklisch betrieben, welches die ersten, zweiten und dritten Ausgangsdaten (A1,A2,A3) miteinander vergleicht und die jeweiligen Vergleichsmittel (V1,V2,V3) derart betrieben werden, dass
bei jedem Vergleich, bei dem als Ergebnis alle Ausgangsdaten (A1, A2, A3) gleich sind, keine weitere Aktion durchgeführt wird, und
- bei einem Vergleich, bei dem Abweichungen zwischen den Ausgangsdaten festgestellt werden, dasjenige Teilsystem (1,2,3) mittels einer Mehrheitsentscheidung (ME) als gestört erkannt wird, bei dem die Abweichungen der eigenen Ausgangsdaten (A1,A2,A3) zu den anderen Ausgangsdaten (A1,A2,A3) am größten ist, und auf Grund dieses Ergebnisses wird,
- für den Fall, dass das erste Teilsystem (1) als gestört erkannt wurde, die zweite Applikationsbeziehung (AR2) von dem passiven Zustand in einen aktiven Zustand überführt und entsprechend die erste Applikationsbeziehung (AR1) von dem aktiven Zustand in einen passiven Zustand überführt und von nun an werden die zweiten Ausgangsdaten (A2) über die Ausgabemittel (IO-Device) für den Prozess bereitgestellt, wobei das zweite und das dritte Teilsystem (2,3) dem ersten Teilsystem (1) zeitlich nachlaufen und das erste Teilsystem (1) über die Kommunikationspfade (KP12,KP13) zeitlich asynchron den Austausch der Daten durchführt, wobei aus dem ersten Teilsystem (1) und dem zweiten Teilsystem (2) ein erstes Nachlaufsystem (N12) und aus dem ersten Teilsystem (1) und dem dritten Teilsystem (3) ein zweites Nachlaufsystem (N13) gebildet wird, wobei Synchronisationsdaten für das erste Nachlaufsystem (N12) und das zweite Nachlaufsystem (N13) identisch sind und über eine Multicastbasierte Kommunikation von dem ersten Teilsystem (1) ausgesendet werden.

2. Verfahren nach Anspruch 1, wobei das zweite Teilsystem (2) eine zweite Zyklusquittung (ZQ2) und das dritte Teilsystem (3) eine dritte Zyklusquittung (ZQ3) an das erste Teilsystem (1) sendet, und im ersten Teilsystem (1) ein nächster erneuter erster Programmzyklus(Z1) erst gestartet, wenn alle Quittungen eingetroffen sind.

3. Verfahren nach Anspruch 1 oder 2, wobei die Kommunikation der Teilsysteme (1,2,3) über das Kommunikations-Netzwerk (KN) mittels OPC UA oder OPC UA TSN erfolgt.

4. Verfahren nach einem Anspruch 1 bis 3, wobei die Kommunikation der Teilsysteme (1,2,3) zu dem Ausgabemittel (IO-Dev) für eines Profinet-Netzwerk mit dem entsprechenden Peripherieprotokoll (PN) konfiguriert wird.

5. Verfahren nach einem der Ansprüche 1 bis 4, wobei zumindest ein Teilsystem (1,2,3) in einer IT-Infrastruktur als virtuelles Teilsystem in Form einer Dienstleistung bereitgestellt wird.

6. Verfahren nach einem der Ansprüche 1 bis 5, wobei im Fall, dass das zweite Teilsystem (2) die Ausgangsdaten (IO-Dev) über die aktive zweite Applikationsbeziehung (AR2) an die Ausgabemittel (IO-Dev) weiterleitet nun das dritte Teilsystem (3) die dritte Ausgabequittung (AQ3) und die dritte Zyklusquittung (ZQ3) an das zweite Teilsystem (1) sendet und
- das zweite Teilsystem (2) die zweiten Ausgangsdaten (A2) erst an die Ausgabemittel (IO-Dev) weitergibt, wenn die dritte Ausgabequittung (AQ3) und die dritte Zyklusquittung (ZQ3) beim zweiten Teilsystem (2) eingetroffen sind.

7. Redundantes Automatisierungssystem (100) zur Steuerung eines technischen Prozesses, umfassend ein erstes Teilsystem (1), ein zweites Teilsystem (2), ein drittes Teilsystem (3) und Ausgabemittel (IO-Dev), welche über ein Kommunikations-Netzwerk (KN) verbunden sind, und Kommunikations-Pfade (KP12,KP13,KP23) zwischen den Teilsystemen (1,2,3) zum Austausch von Daten ausgebildet sind, wobei
- das erste Teilsystem (1) ausgebildet ist mit einem ersten Steuerprogramm (P1) mit einem ersten Programmzyklus (Z1) zyklusorientiert erste Ausgangsdaten (A1) über eine aktive erste Applikationsbeziehung (AR1) an die Ausgabemittel (IO-Dev) auszugeben,
- das zweite Teilsystem (2) mit einem zweiten Steuerprogramm (P2) mit einem zweiten Programmzyklus (Z2) ausgebildet ist in Bereitschaft über eine zweite Applikationsbeziehung (AR2) zweite Ausgangsdaten (A2) für die Ausgabemittel (IO-Dev) bereitzustellen,
- das dritte Teilsystem (3) mit einem dritten Steuerprogramm (P3) mit einem dritten Programmzyklus (Z3) ausgebildet ist in Bereitschaft über eine dritte Applikationsbeziehung (AR3) dritte Ausgangsdaten (A3) für die Ausgabemittel (IO-Dev) bereitzustellen, wobei weiterhin
- die drei Teilsysteme (1,2,3) ausgestaltet sind, sich gegenseitig ihre berechneten Ausgangsdaten (A1, A2, A3) bereitzustellen,
**dadurch gekennzeichnet, dass**
- das zweite Teilsystem (2) ein zweites Quittungsausgabemittel (QAM2) aufweist, welches ausgestaltet ist eine zweite Ausgabequittung (AQ2) zu senden und
- das dritte Teilsystem (3) ein drittes Quittungsausgabemittel (QAM3) aufweist, welches ausgestaltet ist, eine dritte Ausgabequittung (AQ3) zu senden und
- das erste Teilsystem (1) ein Freischaltmittel (FSM) aufweist, welches ausgestaltet ist, die ersten Ausgangsdaten (A1) erst an die Ausgabemittel (IO-Dev) weiterzugeben, wenn die
- zweite Ausgabequittung (AQ2) und die dritte Ausgabequittung (AQ3) im ersten Teilsystem (1) eingetroffen sind, und weiterhin
- weist jedes Teilsystem (1,2,3) ein Vergleichsmittel (V1,V2,V3) auf, welches ausgestaltet ist, zyklisch die ersten, zweiten und dritten Ausgangsdaten (A1,A2,A3) miteinander zu vergleichen und für den Fall, dass bei
- einem Vergleich, bei dem als Ergebnis alle Ausgangsdaten (A1, A2, A3) gleich sind, keine weitere Aktion durchgeführt wird, und für den Fall, dass
- bei einem Vergleich, bei dem Abweichungen zwischen den Ausgangsdaten festgestellt werden, dasjenige Teilsystem (1,2,3) mittels einer Mehrheitsentscheidung (ME) als gestört erkannt wird, bei dem die Abweichungen der eigenen Ausgangsdaten (A1,A2,A3) zu den anderen Ausgangsdaten (A1,A2,A3) am größten ist, wobei dazu ein Abweichungserfassungsmittel (AEM) vorhanden ist, wobei das
- erste Teilsystem weiterhin ausgestaltet ist für den Fall, dass das erste Teilsystem (1) als gestört erkannt wurde, die erste Applikationsbeziehung (AR1) von dem aktiven Zustand in einen passiven Zustand zu überführen und das
- zweite Teilsystem (2) ausgestaltet ist die zweite Applikationsbeziehung (AR2) von dem passiven Zustand in einen aktiven Zustand zu überführen, wodurch von nun an die zweiten Ausgangsdaten (A2) über die Ausgabemittel (IO-Device) für den Prozess bereitgestellt werden, dass aus dem ersten Teilsystem (1) und dem zweiten Teilsystem (2) ein erstes Nachlaufsystem (N12) gebildet ist, und dass aus dem ersten Teilsystem (1) und dem dritten Teilsystem (3) ein zweites Nachlaufsystem (N13) gebildet ist, wobei das erste Teilsystem (1) derart ausgestaltet ist, dass es über eine Multicast-basierte Kommunikation Synchronisationsdaten für das erste Nachlaufsystem (N12) und das zweite Nachlaufsystem (N13) bereitstellt.

8. Redundantes Automatisierungssystem (100) nach Anspruch 7, wobei
- das zweite Quittungsausgabemittel (QAM2) ausgestaltet ist, eine zweite Zyklusquittung (ZQ2) an das erste Teilsystem (1) zu senden und
- das dritte Quittungsausgabemittel (QAM3) ausgestaltet ist, eine dritte Zyklusquittung (ZQ3) an das erste Teilsystem (1) zu senden und das erste Teilsystem (1) ausgestaltet ist, einen erneuten ersten Programmzyklus(Z1) erst zu starten, wenn alle Quittungen eingetroffen sind.

9. Redundantes Automatisierungssystem (100) nach Anspruch 7 oder 8, wobei zumindest ein Teilsystem (1,2,3) in einer IT-Infrastruktur als virtuelles Teilsystem in Form einer Dienstleistung angeordnet ist.

## Claims

1. Method for operating a redundant automation system (100) for controlling a technical process, wherein a first subsystem (1), a second subsystem (2), a third subsystem (3) and output means (IO-Dev) for the process are operated in a communications network (KN) in such a way that communication paths (KP12,KP13,KP23) between them are used for exchanging data, wherein
- the first subsystem (1) with a first control program (P1) with a first program cycle (Z1) forwards first output data (A1) to the output means (IO-Dev) in a cycle-oriented manner via a peripheral protocol (PN), wherein for this purpose an active first application relationship (AR1) is established between the first subsystem (1) and the output means (IO-Dev), wherein parallel to the first subsystem (1)
- the second subsystem (2) with a second control program (P2) with a second program cycle (Z2) calculates second output data (A2) or the third subsystem (3) with a third control program (P3) with a third program cycle (Z3) calculates third output data (A3) in readiness for the assumption of control of the technical process, wherein furthermore
- a passive second application relationship (AR2) is established between the second subsystem (2) and the output means (IO-Dev), and a passive third application relationship (AR3) is established between the third subsystem (3) and the output means (IO-Dev),
- wherein the three subsystems (1,2,3) are operated in such a way that they have knowledge of one another via their calculated output data (A1, A2, A3),
**characterised in that**
- the second subsystem (2) sends a second output acknowledgement (AQ2), and the third subsystem (3) sends a third output acknowledgement (AQ3) to the first subsystem (1),
- the first subsystem (1) forwards the first output data (A1) to the output means (IO-Dev) only when the
- second output acknowledgement (AQ2) and third output acknowledgement (AQ3) have arrived in the first subsystem (1), and furthermore,
- in each subsystem (1,2,3) a means of comparison (V1,V2,V3) is cyclically operated, which compares the first, second and third output data (A1,A2,A3) with one another and the respective means of comparison (V1,V2,V3) are operated in such a way that
no further action is carried out for each comparison in which all output data (A1, A2, A3) are the same as a result, and
- in a comparison in which deviations between the items of output data are established, that subsystem (1,2,3) is recognised as being faulty by means of a majority decision (ME) in which the deviations of its own output data (A1,A2,A3) from the other output data (A1,A2,A3) are greatest, and on the basis of this result,
- in the event that the first subsystem (1) has been identified as being faulty, the second application relationship (AR2) is transferred from the passive state into an active state and the first application relationship (AR1) is correspondingly transferred from the active state into a passive state, and from then on the second output data (A2) is provided for the process via the output means (IO-Device), wherein the second and the third subsystem (2,3) follow the first subsystem (1) in time and the first subsystem (1) carries out the exchange of the data via the communication paths (KP12,KP13) asynchronously in time, wherein a first follow-up system (N12) is formed from the first subsystem (1) and the second subsystem (2) and a second follow-up system (N13) is formed from the first subsystem (1) and the third subsystem (3), wherein synchronisation data for the first follow-up system (N12) and the second follow-up system (N13) is identical and is transmitted by the first subsystem (1) via multicast-based communication.

2. Method according to claim 1, wherein the second subsystem (2) sends a second cycle acknowledgement (ZQ2) and the third subsystem (3) sends a third cycle acknowledgement (ZQ3) to the first subsystem (1), and a next new first program cycle (Z1) is started in the first subsystem (1) only when all the acknowledgements have arrived.

3. Method according to claim 1 or 2, wherein the communication of the subsystems (1,2,3) takes place via the communications network (KN) by means of OPC UA or OPC UA TSN.

4. Method according to one of claims 1 to 3, wherein the communication of the subsystems (1,2,3) to the output means (IO-Dev) for a Profinet network is configured with the corresponding peripheral protocol (PN).

5. Method according to one of claims 1 to 4, wherein at least one subsystem (1,2,3) is provided in an IT infrastructure as a virtual subsystem in the form of a service.

6. Method according to one of claims 1 to 5, wherein in the event that the second subsystem (2) forwards the output data (IO-Dev) via the active second application relationship (AR2) to the output means (IO-Dev), the third subsystem (3) now sends the third output acknowledgement (AQ3) and the third cycle acknowledgement (ZQ3) to the second subsystem (1) and
- the second subsystem (2) transmits the second output data (A2) to the output means (IO-Dev) only when the third output acknowledgement (AQ3) and the third cycle acknowledgement (ZQ3) have arrived at the second subsystem (2).

7. Redundant automation system (100) for controlling a technical process, comprising a first subsystem (1), a second subsystem (2), a third subsystem (3) and output means (IO-Dev), which are connected via a communications network (KN), and communication paths (KP12,KP13,KP23) which are configured between the subsystems (1,2,3) for exchanging data, wherein
- the first subsystem (1) is configured with a first control program (P1) with a first program cycle (Z1) to output first output data (A1) via an active first application relationship (AR1) to the output means (IO-Dev) in a cycle-oriented manner,
- the second subsystem (2) is configured with a second control program (P2) with a second program cycle (Z2) in readiness to provide second output data (A2) for the output means (IO-Dev) via a second application relationship (AR2),
- the third subsystem (3) with a third control program (P3) with a third program cycle (Z3) is designed in readiness to provide third output data (A3) for the output means (IO-Dev) via a third application relationship (AR3), wherein furthermore
- the three subsystems (1,2,3) are designed to mutually provide their calculated output data (A1, A2, A3),
**characterised in that**
- the second subsystem (2) has a second acknowledgement output means (QAM2) which is designed to send a second output acknowledgement (AQ2) and
- the third subsystem (3) has a third acknowledgement output means (QAM3) which is designed to send a third output acknowledgement (AQ3) and
- the first subsystem (1) has a means of release (FSM) which is designed to pass on the first output data (A1) to the output means (IO-Dev) only when the
- second output acknowledgement (AQ2) and the third output acknowledgement (AQ3) have arrived in the first subsystem (1), and furthermore
- each subsystem (1,2,3) has a means of comparison (V1,V2,V3) which is designed to cyclically compare the first, second and third output data (A1,A2,A3) with one another and, in the event of
- a comparison in which the result is that all the output data (A1, A2, A3) is the same, no further action is carried out, and in the event of
- a comparison in which deviations between the items of output data are established, the subsystem (1,2,3), in which the deviations of its own output data (A1,A2,A3) from the other output data (A1,A2,A3) are greatest, is recognised as being faulty by means of a majority decision (ME), wherein a deviation detection means (AEM) is provided for this purpose, wherein the
- first subsystem is furthermore configured to transfer the first application relationship (AR1) from the active state into a passive state in the event that the first subsystem (1) has been recognised as being faulty, and the
- second subsystem (2) is configured to transfer the second application relationship (AR2) from the passive state into an active state, whereby from now on the second output data (A2) is made available via the output means (IO-Device) for the process, that a first follow-up system (N12) is formed from the first subsystem (1) and the second subsystem (2), and that a second follow-up system (N13) is formed from the first subsystem (1) and the third subsystem (3), wherein the first subsystem (1) is configured in such a way that it provides synchronisation data for the first follow-up system (N12) and the second follow-up system (N13) via multicast-based communication.

8. Redundant automation system (100) according to claim 7, wherein
- the second acknowledgement output means (QAM2) is configured to send a second cycle acknowledgement (ZQ2) to the first subsystem (1) and
- the third acknowledgement output means (QAM3) is configured to send a third cycle acknowledgement (ZQ3) to the first subsystem (1) and the first subsystem (1) is configured to start a new first program cycle (Z1) only when all the acknowledgements have arrived.

9. Redundant automation system (100) according to claim 7 or 8, wherein at least one subsystem (1,2,3) is arranged in an IT infrastructure as a virtual subsystem in the form of a service.

## Revendications

1. Procédé pour faire fonctionner un système (100) d'automatisation redondant pour la commande d'un processus technique, dans lequel on fait fonctionner un premier système (1) partiel, un deuxième système (2) partiel, un troisième système (3) partiel et des moyens (IO-Dev) d'édition pour le processus dans un réseau (KN) de communication, de manière à utiliser des chemins (KP12, KP13, KP23) de communication entre eux pour l'échange de données, dans lequel
- le premier système (1) partiel envoie aux moyens (IO-Dev) d'édition par un protocole (PN) périphérique des premières données (A1) de sortie à orientation cycle par un premier programme (P1) de commande ayant un premier cycle (Z1) de programme, dans lequel à cet effet on établit une première relation (AR1) d'application active entre le premier système (1) partiel et les moyens (IO-Dev) d'édition, dans lequel en parallèle au premier système (1) partiel
- le deuxième système (2) partiel calcule, pour la préparation de la prise en charge de la commande du processus technique, par un deuxième programme (P2) de commande ayant un deuxième cycle (Z2) de programme des deuxièmes données (A2) de sortie et respectivement le troisième système (3) partiel par un troisième programme (P3) de commande ayant un troisième cycle (Z3) de programme des troisièmes données (A3) de sortie, dans lequel en outre
- on établit, entre le deuxième système (2) partiel et les moyens (IO-Dev) d'édition, une deuxième relation (AR2) d'application passive et, entre le troisième système (3) partiel et les moyens (IO-Dev) d'édition, une troisième relation (AR3) d'application passive,
- dans lequel on fait fonctionner les trois systèmes (1, 2, 3) partiels, de manière à ce qu'ils aient connaissance l'un l'autre de leurs données (A1, A2, A3) de sortie calculées, **caractérisé en ce que**
- le deuxième système (2) partiel envoie un deuxième accusé (AQ2) de réception et le troisième système (3) partiel envoie un troisième accusé (AQ3) de réception au premier système (1) partiel,
- le premier système (1) partiel n'envoie les premières données (A1) de sortie aux moyens (IO-Dev) d'émission que si
- le deuxième accusé (AQ2) de réception et le troisième accusé (AQ3) de réception sont arrivés dans le premier système (1) partiel et en outre,
- on fait fonctionner cycliquement dans chaque système (1, 2, 3) partiel un moyen (V1, V2, V3) de comparaison, qui compare entre elles les premières, deuxièmes et troisièmes données (A1, A2, A3) de sortie et on fait fonctionner les moyens (V1, V2, V3) respectifs de comparaison, de manière
- à ne pas effectuer d'autres actions à chaque comparaison, pour laquelle en résultat toutes les données (A1, A2, A3) de sortie sont les mêmes, et
- à détecter pour une comparaison, dans laquelle on constate des écarts entre les données de sortie, comme perturbé le système (1, 2, 3) partiel au moyen d'une décision (ME) à la majorité, dans lequel les écarts de ses propres données (A1, A2, A3) de sortie par rapport aux autres données (A1, A2, A3) de sortie est le plus grand et sur la base de ce résultat,
- dans le cas où le premier système (1) partiel a été détecté comme perturbé, on fait passer la deuxième relation (AR2) d'application de l'état passif à un état actif et, d'une manière correspondante, on fait passer la première relation (AR1) d'application de l'état actif à un état passif, et à partir de là, on met les deuxièmes données (A2) de sortie à disposition du processus par les moyens (IO-Device) d'édition, dans lequel le deuxième et le troisième systèmes (2, 3) partiels suivent dans le temps le premier système (1) partiel et le premier système (1) partiel effectue l'échange des données, de manière asynchrone dans le temps par les chemins (KP12, KP13) de communication, dans lequel on forme à partir du premier système (1) partiel et du deuxième système (2) partiel, un premier système (N12) de poursuite, à partir du premier système (1) partiel et du troisième système (3) partiel, un deuxième système (N13) de poursuite, dans lequel des données de synchronisation du premier système (N12) de poursuite et du deuxième système (N13) de poursuite sont pareils et sont émises par le premier système (1) partiel par une communication reposant sur le multicast.

2. Procédé suivant la revendication 1, dans lequel le deuxième système (2) partiel envoie un deuxième accusé (ZQ2) de réception de cycle et le troisième système (3) partiel envoie un troisième accusé (ZQ3) de réception de cycle au premier système (1) partiel et dans le premier système (1) partiel un premier cycle (Z1) de programme venant immédiatement ensuite, renouvelé ne débute, que si tous les accusés de réception sont arrivés.

3. Procédé suivant la revendication 1 ou 2, dans lequel la communication des systèmes (1, 2, 3) partiels s'effectue par le réseau (KN) de communication au moyen d'OPC UA ou d'OPC UA TSN.

4. Procédé suivant l'une des revendications 1 à 3, dans lequel on configure la communication des systèmes (1, 2, 3) partiels avec le moyen (IO-Dev) d'édition pour un réseau Profinet par le protocole (PN) périphérique correspondant.

5. Procédé suivant l'une des revendications 1 à 4, dans lequel on met à disposition un système (1, 2, 3) partiel dans une infrastructure IT comme système partiel virtuel sous la forme d'une prestation de service.

6. Procédé suivant l'une des revendications 1 à 5, dans lequel dans le cas où le deuxième système (2) partiel envoie les données (IO-Dev) de sortie par la deuxième relation (AR2) d'application active aux moyens (IO-Dev) d'édition, alors le troisième système (3) partiel envoie le troisième accusé (AQ3) de réception et le troisième accusé (ZQ3) de cycle au deuxième système (1) partiel et
- le deuxième système (2) partiel n'envoie les deuxièmes données (A2) de sortie aux moyens (IO-Dev) d'édition, que si le troisième accusé (AQ3) de réception et le troisième accusé (ZQ3) de cycle ont été reçus au deuxième système (2) partiel.

7. Système (100) d'automatisation redondant de commande d'un processus technique comprenant un premier système (1) partiel, un deuxième système (2) partiel, un troisième système (3) partiel et des moyens (IO-Dev) d'édition, qui sont reliés par un réseau (KN) de communication, et des chemins (KP12, KP13, KP23) de communication sont constitués entre les systèmes (1, 2, 3) partiels pour l'échange de données, dans lequel
- le premier système (1) partiel est constitué pour, par un premier programme (P1) de commande à orientation cycle ayant un premier cycle (Z1) de programme, envoyer aux moyens (IO-Dev) d'édition des premières données (A1) de sortie par une première relation (AR1) d'application active,
- le deuxième système (2) partiel est constitué pour, par un deuxième programme (P2) de commande ayant un deuxième cycle (Z2) de programme, mettre à disposition par une deuxième relation (AR2) d'application des deuxièmes données (A2) de sortie pour les moyens (IO-Dev) d'édition,
- le troisième système (3) partiel est constitué pour, par un troisième programme (P3) de commande ayant un troisième cycle (Z3) de programme, mettre à disposition par une troisième relation (AR3) d'application des troisièmes données (A3) de sortie pour les moyens (IO-Dev) d'édition, dans lequel en outre
- les trois systèmes (1, 2, 3) partiels sont conformés pour mettre à disposition mutuellement leurs données (A1, A2, A3) de sortie calculées,
**caractérisé en ce que**
- le deuxième système (2) partiel a un deuxième moyen (QAM2) d'émission d'accusé de réception, qui est conformé pour envoyer un deuxième accusé (AQ2) de réception et
- le troisième système (3) partiel a un troisième moyen (QAM3) d'émission d'accusé de réception, qui est conformé pour envoyer un troisième accusé (AQ3) de réception et
- le premier système (1) partiel a un moyen de (FSM) de libération, qui est conformé pour n'envoyer des premières données (A1) de sortie aux moyens (IO-Dev) d'édition, que si
- le deuxième accusé (AQ2) de réception et le troisième accusé (AQ3) de réception sont arrivés dans le premier système (1) partiel et en outre
- chaque système (1, 2, 3) partiel a un moyen (V1, V2, V3) de comparaison, qui est conformé pour comparer entre eux cycliquement les premières, deuxièmes et troisièmes données (A1, A2, A3) de sortie et dans le cas où,
- dans une comparaison, dans laquelle en résultat toutes les données (A1, A2, A3) de sortie sont les mêmes, ne pas effectuer d'autres actions, et dans le cas où,
- dans une comparaison, dans laquelle on constate des écarts entre les données de sortie, reconnaître comme perturbé au moyen d'une décision (ME) à la majorité, le système (1, 2, 3) partiel, dans lequel les écarts de ses propres données (A1, A2, A3) de sortie par rapport aux autres données (A1, A2, A3) de sortie est le plus grand, dans lequel, il y a cet effet, un moyen (AEM) de détection des écarts, dans lequel
- le premier système partiel est conformé en outre, dans le cas où on a détecté comme perturbé le premier système (1) partiel, pour faire passer la première relation (AR1) d'application de l'état actif à un état passif et
- le deuxième système (2) partiel est conformé pour faire passer la deuxième relation (AR2) d'application de l'état passif à un état actif grâce à quoi, dès lors, on met les deuxièmes données (A2) de sortie par les moyens (IO-Device) d'édition à disposition du processus, **en ce qu'**il est formé à partir du premier système (1) partiel et du deuxième système (2) partiel, un premier système (N12) de poursuite et **en ce qu'**il est formé à partir du premier système (1) partiel et du troisième système (3) partiel, un deuxième système (N13) de poursuite, dans lequel le premier système (1) partiel est conformé, de manière à mettre par une communication reposant sur le multicast des données de synchronisation du premier système (N12) de poursuite et du deuxième système (N13) de poursuite.

8. Système (100) d'automatisation redondant de commande suivant la revendication 7, dans lequel
- le deuxième moyen (QAM2) d'accusé de réception est conformé pour envoyer un deuxième accusé (ZQ2) de réception de cycle au premier système (1) partiel et
- le troisième moyen (QAM3) d'accusé de réception est conformé pour envoyer un troisième accusé (ZQ3) de réception de cycle au premier système (1) partiel et le premier système (1) partiel est conformé pour ne faire débuter un premier cycle (Z1) de programme renouvelé, que si tous les accusés de réception sont reçus.

9. Système (100) d'automatisation redondant de commande suivant la revendication 7 ou 8, dans lequel au moins un système (1, 2, 3) partiel est disposé dans une infrastructure IT comme système partiel virtuel sous la forme d'une prestation de service.
